# EUROPÄISCHE PATENTSCHRIFT

(11) **EP 2 153 700 B1**
(45) Veröffentlichungstag und Bekanntmachung des Hinweises auf die Patenterteilung: **06.04.2011**
(21) Anmeldenummer: 07728846.2
(22) Anmeldetag: 07.05.2007
(51) Int. Cl.: H05B 41/04, H05B 41/288

(54) **VERFAHREN ZUR ZÜNDUNG UND ZUM START VON HOCHDRUCKENTLADUNGSLAMPEN**
METHOD FOR IGNITING AND STARTING HIGH-PRESSURE DISCHARGE LAMPS
PROCÉDÉ D'ALLUMAGE ET DE DÉMARRAGE DE LAMPES À DÉCHARGE HAUTE PRESSION

(43) Veröffentlichungstag der Anmeldung: 17.02.2010
(73) Patentinhaber: OSRAM Gesellschaft mit beschränkter Haftung, 81543 München (DE)
(72) Erfinder: KOCH, Bernd, 12489 Berlin (DE); LICHTENBERG, Stefan, 14612 Falkensee (DE)
(86) Internationale Anmeldenummer: PCT/EP2007/054393
(87) Internationale Veröffentlichungsnummer: WO 2008/135089

(56) Entgegenhaltungen:
- EP-A1- 0 987 928
- DE-A1-102004 017 479
- US-A- 5 932 976
- US-B2- 6 518 712

## Beschreibung

### Technisches Gebiet

Die Erfindung bezieht sich auf ein Verfahren zur Zündung von Hochdruckentladungslampen. Die Erfindung bezieht sich vor allem auf ein Zündverfahren, das in ein elektronisches Betriebsgerät implementiert werden kann und das Problem der polaritätsabhängigen Zündwilligkeit von Entladungslampen anspricht. Die Verwendung von elektronischen Vorschaltgeräten nimmt seit längerer Zeit immer mehr zu. Hochdruckentladungslampen sind bezüglich ihrer Betriebsweise schwieriger zu handhaben als Niederdruck-Entladungslampen, und die elektronischen Betriebsgeräte sind daher aufwendiger. Üblicherweise werden HochdruckEntladungslampen mit einem niederfrequenten Rechteckstrom betrieben, der auch ,wackelnder Gleichstrombetrieb' genannt wird. Dieser Rechteckstrom bewegt sich im Bereich zwischen 100 Hz und 1 kHz, und stellt sicher, dass die Elektroden der Lampe trotz eines Quasi-Gleichstrombetriebs gleichmäßig belastet werden. Für die Erzeugung dieses Signals wurde bisher meistens eine Vollbrücke verwendet. Da dies hohe Kosten verursacht, ist man in jüngerer Zeit dazu übergegangen, zur Signalerzeugung eine Halbbrücke zu verwenden, und die Lampe in ein Symmetriernetzwerk aus vier Koppelkondensatoren zu betten.

### Stand der Technik

Aus der DE 10 2004 017 479 A1 ist ein solches Vorschaltgerät bekannt. Die Lampe wird hier mit einem niederfrequenten Rechtecksignal betrieben. Für die Zündung haben solche Betriebsgeräte oftmals ein Überlagerungszündgerät, dass auf die Spannung, die an der Lampe anliegt einen hohen Zündspannungspuls von mehreren tausend Volt aufmoduliert. Dieses Aufmodulieren wurde bisher nur im positiv gepolten Quadranten oder nur im negativ gepolten Quadranten der Lampenspannung bewerkstelligt. Somit wurden an die Lampe bisher immer nur positive oder nur negative Zündpulse angelegt. Dabei blieb die Spannung der Zündpulse gegenüber der an die Lampe angelegten Leerlaufspannung (die sogenannte Übernahmespannung) immer gleich. Nun gibt es aber Lampen, die, wenn sie immer mit Zündpulsen gleicher Polarität beaufschlagt werden ungewöhnliche Eigenschaften entwickeln. Sie wirken dann als eine Art Diode, die bei einer Ansteuerung mit einer Halbbrücke und Symmetrierkondensatoren Schwierigkeiten machen. Die Kondensatoren werden ungleichmäßig geladen, was sich dann auf die Spannung an der Lampe auswirkt, die dann nicht mehr in Betrieb gesetzt werden kann. Das Betriebsgerät versucht für eine gewisse Zeit, die Lampe zu zünden. Gelingt dies nicht, so schaltet das Betriebsgerät die Spannung für eine längere Zeit ab, bevor es einen neuen Versuch startet. Diese Zeit ist notwendig, damit die Lampe wieder in einen Zustand fällt, der nicht sofort wieder einen Gleichrichteffekt auslöst. Für den Benutzer ist dies höchst ärgerlich, da er lange Zeit warten muss, bis seine Leuchte wirklich Licht abgibt.

### Aufgabe

Es ist daher Aufgabe der vorliegenden Erfindung, das Verfahren zum Zünden von Hochdruckentladungslampen zu verbessern um die Lampen schneller starten zu können.

### Darstellung der Erfindung

Die Aufgabe wird gelöst durch ein Verfahren nach dem Anspruch 1. Die Zündung von Hochdruckentladungslampen wird normalerweise in sogenannten Bursts bewerkstelligt. Diese Bursts sind typischerweise wenige Sekunden lang, und in dieser Zeit wird die Lampe mit Zündpulsen mit einer Frequenz von einigen zehn bis einigen tausend Hertz beaufschlagt. Bisher wurden in diesen Bursts immer gleich gepolte Zündpulse erzeugt. Einige Lampen fallen nach einer Vielzahl von solchen Zündpulsen in einen Zustand, in dem sie den an sie angelegten Lampenstrom gleichrichten. Durch diesen Gleichrichteffekt bekommen die Koppelkondensatoren eine ungleichmäßige Ladung. Dies wird vom Betriebsgerät bemerkt, und dieses schaltet die Zünd- und Lampenspannung ab, da dies ein Abbruchkriterium ist. Um die Ladung in den Koppelkondensatoren wieder zu vergleichmäßigen und die Lampe wieder in einen Zustand zu bringen, der bei erneuten Zündpulsen nicht wieder einen Gleichrichteffekt auslöst, ist eine längere Pause notwendig. Daher wird vorgeschlagen, entweder nach dem Abbruchkriterium die Pause zu verkürzen, und den nächsten Burst um relativ zur Übernahmespannung um 90° phasenverschobenen Zündpulsen ablaufen zu lassen, oder die Phasenlage der Zündpulse ohne Abbruch innerhalb eines Bursts zu wechseln, sobald das Abbruchkriterium erreicht ist. Dies hat einerseits den Vorteil, dass sich der Lampenzustand wieder normalisiert, andererseits werden die Koppelkondensatoren durch die Umpolung schneller wieder in einen gleichmäßigen Ladungszustand gebracht.

### Kurze Beschreibung der Zeichnung(en)

- Fig. 1: Anordnung mit Betriebsgerät und Lampe. Die Lampen- spannung U_{L} wird zwischen Betriebsgerät und Lampe gemessen.
- Fig. 2: Darstellung des Ablaufs einer Zündung nach dem Stand der Technik.
- Fig.: 3 Darstellung des Ablaufs einer Zündung nach der vorliegenden Erfindung der ersten Ausführungsform mit einer sinusförmigen Lampenspannung.
- Fig.: 4 Darstellung des Ablaufs einer Zündung nach der vorliegenden Erfindung ersten Ausführungsform mit einer rechteckförmigen Lampenspannung.
- Fig.: 5 Darstellung des Ablaufs einer Zündung nach der vorliegenden Erfindung zweiten Ausführungsform mit einer sinusförmigen Lampenspannung.

### Bevorzugte Ausführung der Erfindung

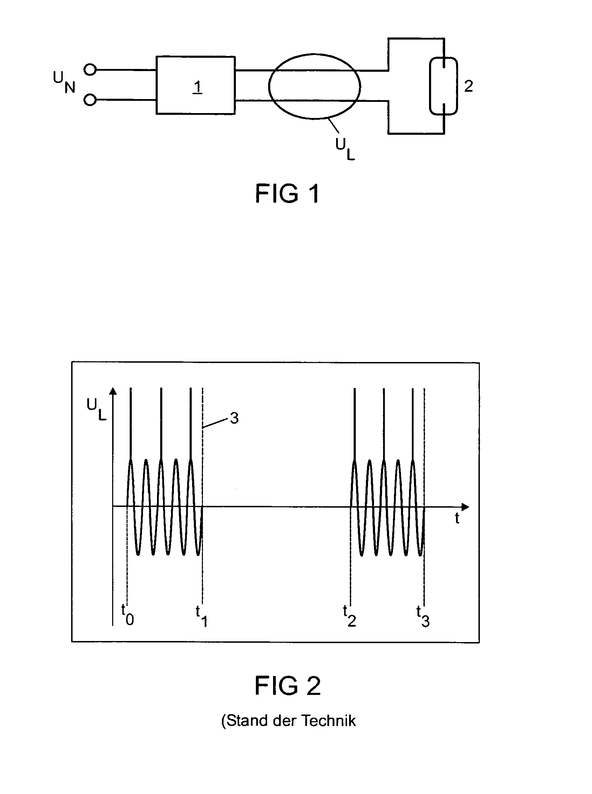

Fig. 1 zeigt ein elektronisches Betriebsgerät (1) mit einer daran angeschlossenen Lampe (2). U_{L} bezeichnet die Lampenspannung, die an der Lampe (2) anliegt.

In Fig. 2 ist diese Lampenspannung für das Verfahren nach dem Stand der Technik über der Zeit aufgetragen. Zum Zeitpunkt t₀ beginnt das Betriebsgerät mit der Lampenzündung. Dabei wird eine - in diesem Fall sinusförmige - Lampenspannung an die Lampe angelegt. Diese Spannung beträgt normalerweise wenige hundert Volt, und dient dazu, die Gasentladung nach einem elektrischen Durchbruch zwischen den Lampenelektroden zu stabilisieren. Die Spannung wird daher Übernahmespannung genannt, weil sie sicherstellen soll, dass die Lampe die angebotene Leistung nach der Zündung übernimmt. Bei jedem zweiten positiven Maximum wird ein Zündpuls mit einer Spannung von mehreren kV überlagert. Der Zündpuls hat gegenüber der Übernahmespannung entweder die gleiche Polarität oder die entgegengesetzte Polarität. Die Frequenz der Sinusschwingung bewegt sich typischerweise bei einigen kHz. Die Lampe wird daher mit sehr vielen Zündpulsen pro Sekunde beaufschlagt. Dies kann wie oben schon erwähnt, dazu führen, dass die Lampe durch die Wechselwirkung von Plasma und Elektrode eine gleichrichtende Eigenschaft aufweist. Dadurch werden die Koppelkondensatoren ungleichmäßig belastet, so dass die in Ihnen gespeicherte Ladung ebenfalls immer ungleichmäßiger wird. Dies führt nach einiger Zeit zu einem Zustand, der das Betriebsgerät dazu veranlasst, die Zündung zum Zeitpunkt t₁ abzubrechen. Danach ist im Ablauf des Betriebsgeräte eine längere Pause bis zum Zeitpunkt t₂ vorgesehen, die notwendig ist, um die Ladung in den Koppelkondensatoren wieder zu Vergleichmäßigen und die Lampe mit Füllung und Elektroden soweit abzukühlen, dass sie sich wieder normal verhält.

### Erste Ausführungsform

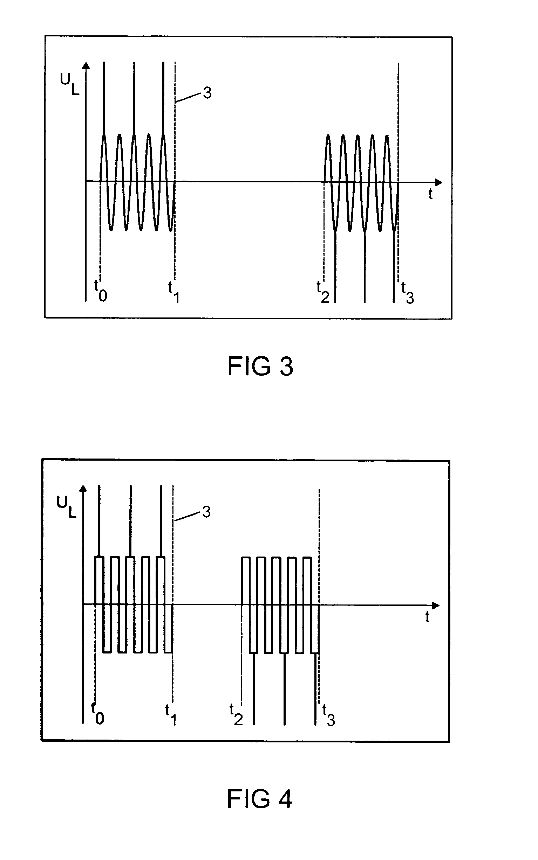

Genau hier setzt die Erfindung an. Fig. 3 zeigt das erfindungsgemäße Verfahren nach der ersten Ausführungsform. Im ersten Burst unterscheiden sich die beiden Verfahren nicht. Die Lampe wird mit Zündpulsen, die gegenüber der Übernahmespannung gleiche oder entgegengesetzte Polarität aufweisen, beaufschlagt. Die Zeit zwischen t₁ und t₂ jedoch, also die Zeit zwischen dem Abbruchkriterium 3 und einem zweiten Burst ist beim erfindungsgemäßen Verfahren kürzer. Im zweiten Burst werden dann Zündpulse mit einer gegenüber dem ersten Burst entgegengesetzten Phasenlage an die Lampe angelegt. Das führt dazu, dass sich das Plasma der Lampe nicht so formieren kann, dass sich die Lampe wie ein Gleichrichter verhält.

Es hat sich erstaunlicherweise gezeigt, dass ein einfaches Umpolen der Zündpulse im zweiten Burst die Probleme bei der Lampenzündung im Stand der Technik löst. Durch das Umpolen werden die Koppelkondensatoren über beide Bursts gesehen gleichmäßiger belastet. Zudem wird die Lampe durch die Zündpulse verschiedener Polung gegenüber der Übernahmespannung davon abgehalten, den Zustand einzunehmen, in dem sie als Gleichrichter wirkt. Bedingt dadurch lässt sich die Lampe normalerweise während des zweiten Bursts problemlos starten.

Dieses Verfahren kann natürlich nicht nur bei Geräten angewandt werden, die eine Sinusspannung höherer Frequenz an die Lampe anlegen, sondern auch bei Betriebsgeräten, die eine Rechteckspannung verwenden, die dann auch niedrigerer Frequenz sein kann. Der Spannungsverlauf für ein solches Gerät ist in Fig. 4 dargestellt. Die Zündspannungspulse sind hier in der Mitte des Rechtecks angeordnet. Sie können aber auch gleich am Anfang des Rechtecks überlagert werden, oder am Ende oder einer beliebigen anderen Stelle.

### Zweite Ausführungsform

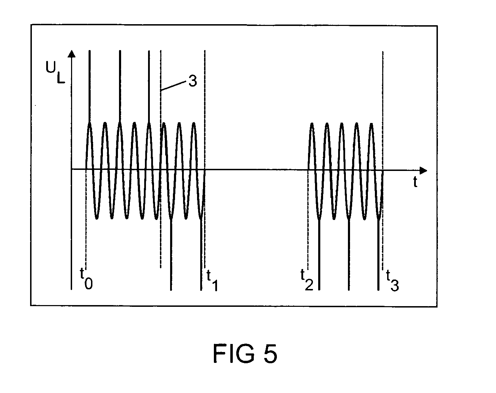

Bei besonders hartnäckigen Lampen kann es vorkommen, dass die Lampe schon im ersten Burst ein Gleichrichterverhalten zeigt, und somit schon im ersten Burst das Abbruchkriterium 3 erreicht wird. Die zweite Ausführungsform ist somit eine Weiterentwicklung der ersten Ausführungsform, bei der das Abbruchkriterium 3 nicht mehr zum Abbruch führt. In dieser Ausführungsform wird die Polarität der Zündpulse innerhalb eines Bursts geändert, sobald das Abbruchkriterium 3 erfüllt ist (Fig. 5). Die sofortige Umkehrung der Polarität wirkt dem Gleichrichteffekt sofort entgegen und kann die Lampe bis zum Ende des Bursts zum Zeitpunkt t₂ dem ,Normalzustannd' wieder näher bringen. Selbstverständlich kann auch diese Ausführungsform auf eine Rechteckspannung oder jede andere geeignete Wechselspannung angewandt werden.

## Patentansprüche

1. Verfahren zur Zündung und zum Start von Hochdruckentladungslampen, wobei für eine vorbestimmte Zeit eines Bursts, der mehrere Vollwellen umfasst, eine Übernahmespannung in Form einer Wechselspannung an die Lampe angelegt wird, und diese Übernahmespannung von Zündpulsen derart überlagert wird, dass sich die Spannung der Zündpulse und die Übernahmespannung aufaddieren, und zwischen zwei Bursts eine vorbestimmte Pause vorgesehen ist, **dadurch gekennzeichnet, dass** die Zündpulse von Burst zu Burst oder innerhalb eines Bursts von der positiven Halbwelle der Übernahmespannung zur negativen Halbwelle der Übernahmespannung wechseln und umgekehrt.

2. Verfahren zur Zündung und zum Start von Hochdruckentladungslampen nach Anspruch 1, **dadurch gekennzeichnet, dass** die vorbestimmte Pause zwischen zwei Bursts verkürzt wird.

3. Verfahren zur Zündung und zum Start von Hochdruckentladungslampen nach Anspruch 1 oder 2, **dadurch gekennzeichnet, dass** die Zündpulse von der positiven Halbwelle der Übernahmespannung zur negativen Halbwelle der Übernahmespannung wechseln und umgekehrt, sobald ein Abbruchkriterium in einem Burst erreicht wird, und der Burst damit nicht abgebrochen wird.

## Claims

1. Method for igniting and for starting high-pressure discharge lamps, a takeover voltage in the form of an AC voltage being applied to the lamp for a predetermined time of a burst comprising a plurality of full cycles, and ignition pulses being superimposed on said takeover voltage in such a way that the voltage of the ignition pulses and the takeover voltage are added up and a predetermined interruption being provided between two bursts, **characterized in that** the ignition pulses from burst to burst or within a burst change from the positive half-cycle of the takeover voltage to the negative half-cycle of the takeover voltage, and vice versa.

2. Method for igniting and for starting high-pressure discharge lamps according to Claim 1, **characterized in that** the predetermined interruption between two bursts is shortened.

3. Method for igniting and for starting high-pressure discharge lamps according to Claim 1 or 2, **characterized in that** the ignition pulses change from the positive half-cycle of the takeover voltage to the negative half-cycle of the takeover voltage, and vice versa, as soon as the abort criterion in a burst is reached, and the burst is therefore not aborted.

## Revendications

1. Procédé d'amorçage et de démarrage de lampes à décharge à haute pression, dans lequel on applique à la lampe, pendant une durée déterminée à l'avance d'une rafale qui comprend plusieurs ondes pleines, une tension de prise en charge, sous la forme d'une tension alternative, et on superpose à cette tension de prise en charge des impulsions d'amorçage, de manière à ce que la tension des impulsions d'amorçage et la tension de prise en charge s'additionnent et il est prévu un intervalle déterminé à l'avance entre deux rafales, **caractérisé en ce que** les impulsions d'amorçage changent d'une rafale à l'autre ou à l'intérieur d'une rafale de la demi onde positive de la tension de prise en charge à la demi onde négative de la tension de prise en charge et vice-versa.

2. Procédé d'amorçage et de démarrage de lampes à décharge à haute pression suivant la revendication 1, **caractérisé en ce que** l'on écourte l'intervalle déterminé à l'avance entre deux rafales.

3. Procédé d'amorçage et de démarrage de lampes à décharge à haute pression suivant la revendication 1 ou 2, **caractérisé en ce que** l'on change les impulsions d'amorçage de la demi onde positive de la tension de prise en charge en la demi onde négative de la tension de prise en charge et vice-versa, dès qu'un critère d'interruption d'une rafale est atteint et on n'interrompt pas ainsi la rafale.
